# EUROPEAN PATENT SPECIFICATION

(11) **EP 1 557 549 B1**
(45) Date of publication and mention of the grant of the patent: **13.07.2011**
(21) Application number: 05001430.7
(22) Date of filing: 25.01.2005
(51) Int. Cl.: F02D 41/14, F02D 41/22, F02D 23/02, F02B 37/12

(54) **Internal combustion engine and method for driving the same**
Brennkraftmaschine und Ansteuerverfahren dafür
Moteur à combustion interne et procédé de commande correspondant

(30) Priority: 26.01.2004 JP 2004017686
(43) Date of publication of application: 27.07.2005
(73) Proprietor: Toyota Jidosha Kabushiki Kaisha, Toyota-shi, Aichi-ken, 471-8571 (JP)
(72) Inventor: Irisawa, Yasuyuki, Toyota-shi Aichi-ken 471-8571 (JP)
(74) Representative: TBK

(56) References cited:
- EP-A1- 1 085 188
- EP-A2- 1 028 243
- EP-A2- 1 243 779
- JP-A- 2001 090 543

## Description

The present invention relates to an internal combustion engine having a turbo-charger for boosting air into a combustion chamber, capable of executing a lean-burn operation for burning a lean fuel-air mixture in the combustion chamber, and an operating method thereof.

Recently, for the purpose of saving the fuel consumption and increasing the output power of the internal combustion engine, the internal combustion engines capable of executing the lean-burn operation for burning the lean fuel-air mixture in the combustion chamber have been positively prevailed. In such internal combustion engines capable of executing the lean-burn operation, it is possible to widen an operative zone for allowing the execution of the lean-burn operation (hereinafter referred to as a lean-burn allowable zone) relative to internal combustion engines of a natural intake type by increasing a compression ratio and/or a boost pressure using a turbo-charger. According to the internal combustion engine having a turbo-charger capable of executing the lean-burn operation, the fuel consumption or the boosting efficiency could be effectively improved by applying boost pressure adjusting means, such as a variable nozzle mechanism or a waste gate valve to the turbo-charger and controlling this means while opening a throttle valve so that the lack of air amount relative to the required torque is supplemented by the boosting.

On the other hand, in the internal combustion engine having a turbo-charger capable of adjusting boost pressure, it is necessary to prepare for any trouble generated in the boost pressure adjusting means to disturb the favorable adjustment of the boost pressure. Japanese Patent Application Laid-open No. 2001-090543 discloses a countermeasure against such a trouble of the boost pressure adjusting means. That is, an actual boost pressure generated by the turbo-charger is detected and an estimated value of the boost pressure (an estimated boost pressure) is obtained in accordance with predetermined steps. If the actual boost pressure higher by a predetermined ratio than the estimated boost pressure continues for a predetermined time, it is assumed that parts in the boost pressure adjusting means may be malfunctioned, and the lean-burn operation is inhibited. Also, Japanese Patent Application Laid-open Nos. 2000-291475, 2000-345852 and 01-041629 (1989) disclose methods for controlling the engine when the boost pressure adjusting means is malfunctioned.

However, it is not preferable to always inhibit the lean-burn operation when the boost pressure is not adjustable due to the malfunction in the internal combustion engine capable of executing the lean-burn operation in view of the improvement in the fuel consumption or others. On the other hand, if the lean-burn operation continues without any limitation when the boost pressure adjusting means becomes abnormal, there may be a risk in that the boost pressure excessively rises.

The present invention provides an internal combustion engine which allows the lean-burn operation within a favorable range when the abnormality occurs in the boost pressure adjusting means to prevent the fuel consumption from deteriorating and/or suppress the excessive rise of the boost pressure, and a method for operating the internal combustion engine.

According to the present invention, an internal combustion engine capable of executing a lean-burn operation for burning a lean fuel-air mixture in a combustion chamber is provided, comprising a throttle valve for adjusting an amount of air taken into the combustion chamber; a turbo-charger for boosting air taken into the combustion chamber; means for adjusting a boost pressure caused by the turbo-charger; means for setting an air-fuel ratio so that the fuel-air mixture becomes lean within a range of a predetermined lean-burn allowable area; and means for determining whether or not the abnormality occurs in the boosting adjustment means; wherein when it is determined by the abnormality determination means that the abnormality occurs in the boost pressure adjustment means, the lean-burn allowable area is reduced so that an amount of intake air during the execution of the lean-burn operation is less than an amount of intake air when the throttle valve is fully open under the condition where the boost pressure adjustment means is set at a lower limit of a boost pressure adjustment range.

According to the present invention, a method is also provided, for operating an internal combustion engine capable of executing a lean-burn operation for burning a lean fuel-air mixture in a combustion chamber, the internal combustion engine comprising a throttle valve for adjusting an amount of air taken into the combustion chamber, a turbo-charger for boosting air taken into the combustion chamber, and means for adjusting a boost pressure caused by the turbo-charger, wherein the method comprises a step for allowing the lean-burn operation when it is determined that the abnormality occurs in the boost pressure adjustment means, solely in a case where an amount of intake air corresponding to a torque required for the internal combustion engine is less than an amount of intake air when the throttle valve is fully open under the condition where the boost pressure adjustment means is set at a lower limit of a boost pressure adjustment range.

The above and other objects, effects, features and advantages of the present invention will become more apparent from the following description of embodiments thereof taken in conjunction with the accompanying drawings.
Fig. 1 illustrates a diagrammatic structure of an internal combustion engine according to the present invention;
Fig. 2 is characteristic curves for explaining the operation of the internal combustion engine shown in Fig. 1;
Fig. 3 is a flow chart for explaining the operation of the internal combustion engine shown in Fig. 1; and
Fig. 4 is a flow chart for explaining the operation of the internal combustion engine shown in Fig. 1.

According to the internal combustion engine of the present invention, when it is determined by the abnormality determining means that the abnormality occurs in the boost pressure adjustment means, the lean-burn allowable area, wherein lean fuel-air mixture is burnt in the combustion chamber, is reduced. In the reduced lean-burn allowable area, the lean-burn operation is allowed solely in cases where an amount of intake air corresponding to a torque required for the internal combustion engine is less than an amount of intake air when the throttle valve is fully open under the condition where the boost pressure adjustment means is set at a lower limit of the boost pressure adjustment range (the condition where the boost pressure is settable at the lower limit value by the boost pressure adjustment means).

Thereby, even if the variable nozzle mechanism (nozzles) or the waste-gate valve is fixed in a fully open state and the boost pressure adjustment means is broken at the lower limit of the boost pressure adjustment range, the lean-burn operation is allowable within a range in which the amount of air taken into the combustion chamber is accurately adjustable in correspondence to the required torque by controlling the throttle valve. That is, since the lean-burn operation is allowable within a range in which the amount of air taken into the combustion chamber is accurately adjustable by controlling the throttle valve, even if the boost pressure adjustment means is broken at the lower limit of the boost pressure adjustment range, it is possible to suppress the deterioration of the fuel consumption.

Similarly, when the variable nozzle mechanism (nozzles) or the waste-gate is fixed in an almost closed state or at an intermediate open degree whereby the boost pressure adjustment means is broken at the upper limit or in an intermediate area of the boost pressure adjustment range, the lean-burn operation is allowable only when the actual amount of intake air is less than the amount of intake air when the throttle valve is fully open under the condition where the boost pressure adjustment means is set at the lower limit of the boost pressure adjustment range. Thereby, it is possible to suppress the excessive rise of the boost pressure during the lean-burn operation under the condition where the boost pressure adjustment means is broken at the upper limit or in the intermediate area of the boost pressure adjustment range.

In such a manner, according to the internal combustion engine, since the lean-burn operation is executed in a suitable range when the abnormality occurs in the boost pressure adjustment means, it is possible to suppress the deterioration of the fuel consumption or the excessive rise of the boost pressure when the abnormality occurs in the boost pressure adjustment means.

Preferably, by controlling the boost pressure adjustment means in a predetermined operation area while fully opening the throttle valve, an amount of air taken into the combustion chamber besides the boost pressure is set.

Thereby, it is possible to improve the fuel consumption ratio by further widening the lean-burn allowable area and reduce the pumping loss (throttling loss). The present invention is very useful for improving the performance or reliability of the internal combustion engine in which the boost pressure adjustment means plays an important role in controlling the engine output (torque).

When it is determined that the abnormality generated in the boost pressure adjustment means is to increase the boost pressure, an upper limit value of the opening degree of the throttle valve is preferably set so that the actual amount of intake air does not exceed an amount of intake air when the throttle valve is fully open under the condition where the boost pressure adjustment means is set at the lower limit of the boost pressure adjustment range.

Thereby, for example, when the boost pressure adjustment means is broken at the upper limit or in the intermediate area of the boost pressure adjustment range, it is possible to suppress an excessive rise of the boost pressure.

The boost pressure adjustment means is preferably a variable nozzle mechanism in the turbo-charger. The boost pressure adjustment means may be a waste-gate valve for adjusting an amount of exhaust gas introduced into the turbo-charger.

The preferred embodiments for carrying out the present invention shall be described in more detail below with reference to the drawings.

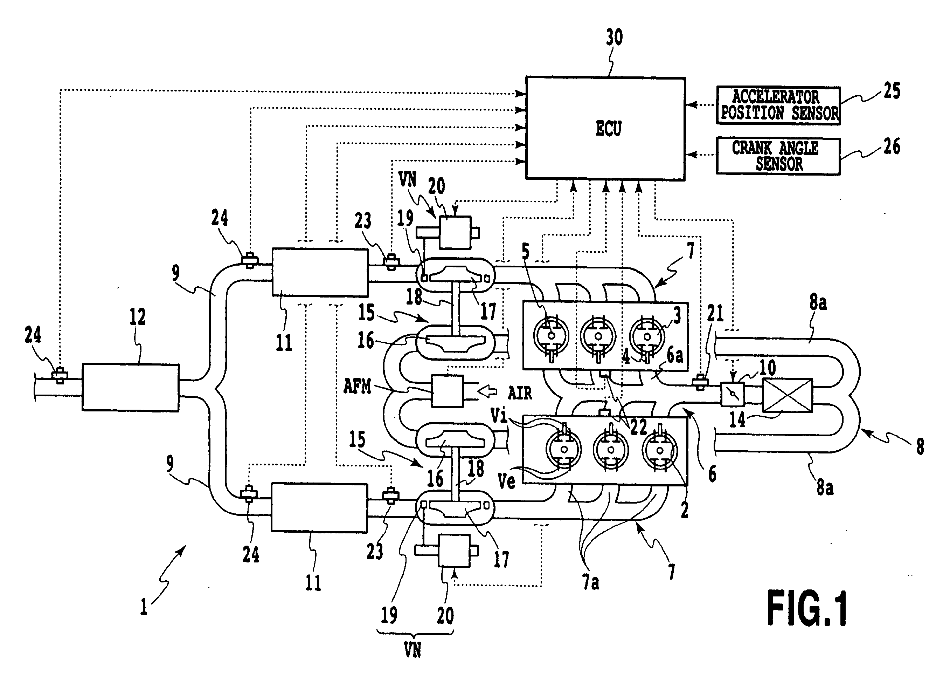

Fig. 1 illustrates a diagrammatic structure of an internal combustion engine according to the present invention. The internal combustion engine 1 shown in this drawing is a V-type multi-cylinder engine (a V-type six cylinder engine) using gasoline as fuel, and is suitable for a drive source of a vehicle. The internal combustion engine 1 burns fuel-air mixture, i.e. gaseous mixture of fuel such as gasoline and air, in a plurality of combustion chambers 2 formed in the respective cylinder blocks to reciprocate pistons 3 therein and generate power.

An injector 4 is arranged in every combustion chamber 2 of each of cylinder heads of the internal combustion engine 1 opposite to the interior of the cylinder. Each injector 4 is coupled to a fuel tank via a fuel pipe or others so that fuel such as gasoline is directly injected into the interior of corresponding combustion chamber 2. Also, in the respective cylinder heads of the internal combustion engine 1, an ignition plug 5 is disposed in every combustion chamber 2. Further, in the respective cylinder heads of the internal combustion engine 1, a pair of intake valves Vi for opening/closing an intake port and a pair of exhaust valves Ve for opening/closing an exhaust port are disposed. The intake valves Vi and the exhaust valves Ve are opened and closed by a valve operating mechanism (not shown). The valve operating mechanism includes a variable valve timing mechanism for adjusting an opening/closing time of the exhaust valves Ve and a variable lift mechanism for adjusting a lift amount of the intake valves V1 and the exhaust valves Ve.

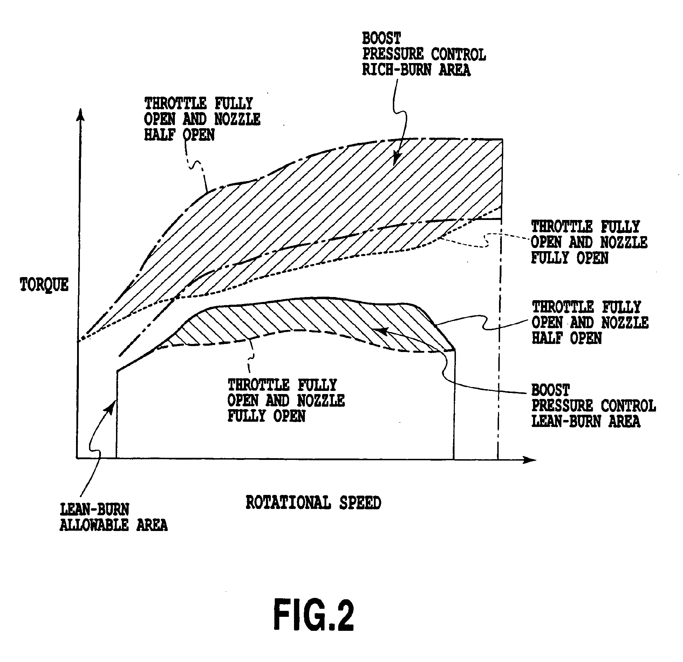

The piston 3 of the internal combustion engine 3 is of a so-called recessed top surface type having a recess (not shown) on the upper surface thereof. In this internal combustion engine 1, fuel such as gasoline is directly injected toward the recess of the piston 3 from the injector 4 while a large amount of air is sucked in into the interior of the respective combustion chambers 2. Thereby, a layer of a fuel-air mixture which is separated from an air layer is formed (stratified) in the vicinity of the ignition plug 5. As a result, the internal combustion engine 1 is capable of executing a stable lean-burn operation using lean fuel-air mixture within a predetermined lean-burn allowable area (an area surrounded by a solid line in Fig. 2). In this regard, since such a lean-burn operation (a homogeneous lean-burn operation) can be executed not only in a case where the fuel is directly injected into the respective combustion chamber 2 but also by a so-called port injection, the inventive internal combustion engine 1 may be constructed as a port ejection type engine.

The intake port of each combustion chamber 2 is connected to an intake pipe 6a forming an intake manifold 6, and an exhaust port of each combustion chamber 2 is connected to an exhaust pipe 7a forming an exhaust manifold 7 provided in the respective banks. The intake manifold 6 is connected to one end of an intake line 8 wherein a throttle valve (an electronically controlled throttle valve) 10 of e.g. drive-by-wire type, is incorporated.

On the other hand, each exhaust manifold 7 is connected to an exhaust line 9, and a former catalyst device 11, containing three-way catalyst, is incorporated into the middle of the exhaust line 9. The two exhaust lines 9 meet together at a point downstream from the former catalyst device 11, and a latter catalyst device 12, containing NOx-occlusion/reduction catalyst, is connected to this meeting point. Harmful substance (such as NOx) in the exhaust gas exhausted from the respective combustion chambers 2 via the exhaust valve Ve is treated or occluded by the former and latter catalyst devices 11 and 12.

The internal combustion engine 1 according to this embodiment further includes a turbo-charger (a supercharger) 15 to enlarge the allowable area for executing the lean-burn operation and to achieve the high output and the low fuel consumption. The super-exchanger 15 is provided in each of two banks of the internal combustion engine 1. Each turbo-charger 15 has a compressor impeller (a compressor element) 16 and a turbine impeller (a turbine element) 17. The compressor impeller 16 and the turbine impeller 17 are connected integrally with each other by a rotary shaft 18.

In this embodiment, the above-mentioned intake line 8 is connected to an air intake opening (not shown) via an air flow meter AFM and an air cleaner not shown, and bifurcated at a point downstream from the air flow meter AFM into two branches 8a. To each branch 8a, a compressor casing for accommodating a compressor impeller 16 of the turbo-charger 15 described above is connected. The two branches 8a of the intake line 8 meet again with each other at a point downstream from the casing of the compressor, and an inter-cooler 14 is incorporated into the intake line 8 at a position between the downstream side meeting point and the throttle valve 10. Also, the turbine casing accommodating the above-mentioned turbine impeller 17 is disposed between the exhaust manifold 7 and the former catalyst device 11 of each bank. Accordingly, when the turbine impeller 17 of the turbo-charger 15 is driven to rotate by exhaust gas discharged from each combustion chamber 2, the compressor impeller 16 rotates via the rotary shaft 18 to compress air fed through the air cleaner or others not shown and supply the same to the combustion chambers 2 respectively.

The turbo-charger 15 is of a so-called variable nozzle type including a plurality of movable vanes 19 disposed in the vicinity of the exhaust gas inlet of the turbine impeller 17 (a turbine casing) as shown in Fig. 1, and an actuator 20 for adjusting the inclination of the movable vanes 19. The movable vanes 19 and the actuator 20 constitutes a variable nozzle mechanism (boost pressure adjustment means) VN. That is, if an opening degree of a plurality of nozzles formed of the movable vanes 19 is adjusted by operating the actuator 20, the rotational speed of the turbine impeller 17 varies to be able to set the boost pressure caused by the turbo-charger 15 at a desired value.

The internal combustion engine 1 thus structured includes an electronic control unit (hereinafter referred to as ECU) 30. The ECU 30 includes CPU, ROM, RAM, input/output ports, memory devices and others not shown. The above-mentioned injector 4, the ignition plug 5, the valve operating mechanism, the throttle valve 10 and others are connected to the input/output ports of the ECU 30, respectively, and controlled by the ECU 30. Similarly, the actuator 20 of the turbo-charger 15 is connected to an input/output port of the ECU 30 and controlled by the ECU 30. Also, the air flow meter AFM incorporated in the intake line 8 is connected to an input/output port of the ECU 30 and transmits a signal representing an amount of air flowing into the intake line 8 to the ECU 30.

Further, an intake pressure sensor 21 is provided in the intake line 8 of the internal combustion engine 1 in the vicinity of an exit of the throttle valve 10. The intake pressure sensor 21 detects a pressure of air sucked into the combustion chambers 2 (an actual boost pressure by the turbo-charger 15) after air has been boosted by the turbo-charger 15 and a flow rate thereof has been adjusted by the throttle valve 10, and inputs a signal representing the detected value to the ECU 30. Also, the internal combustion engine 1 has a knock sensor (knocking detection means) 22 for detecting the knocking in every cylinder block. Also, the knock sensor 22 for detecting the high-frequency vibration due to the knocking is connected to an input/output port of the ECU 30 and outputs a signal representing this vibration to the ECU 30.

In addition, in the exhaust system of the internal combustion engine 1, an air/fuel ratio sensor 23 is disposed at a position between the turbine casing and the former catalyst device 11, and an O₂ sensor 24 is disposed in the vicinity of an exit of the latter catalyst device 12. These sensors 23 and 24 are also connected to the input/output ports of the ECU 30 to transmit signal representing detected values to the ECU 30. Further, an accelerator position sensor 25, a crank angle sensor 26 or others are connected to the input/output ports of the ECU 30. The accelerator position sensor 25 transmits a signal representing a depression amount of an accelerator pedal not shown (an opening degree of the accelerator) to the ECU 30, and the crank angle sensor 26 transmits a signal representing a crank angle of the internal engine 1 to the ECU 30.

The ECU 30 controls, among others, the opening degree of the throttle valve 10, the amount of fuel injected from the injector 4, the ignition timing of the ignition plug 5, the lift amount and the opening/closing timing of the intake valve Vi and the exhaust valve Ve, the operation of the actuator 20 of the turbo-charger 15, based on signals issued from the above-mentioned various sensors. In this embodiment of the internal combustion engine 1, to further enlarge the lean-burn allowable area and reduce the pumping loss (throttling loss) to improve the fuel consumption or boosting efficiency, the ECU 30 operates the actuator 20 in the predetermined operational area under the condition where the throttle valve 10 is fully open so that an opening degree of a plurality of nozzles formed of the movable vanes 19 is adjusted. Thus, an amount of air taken into the combustion chamber 2 is determined together with the boost pressure.

That is, as shown in Fig. 2, in the internal combustion engine 1, as the operational area in which the opening degree of the plurality of nozzles formed of the movable vanes 19 is adjusted by operating the actuator 20 while fully opening the throttle valve 10, a boost pressure control lean-burn area on a torque upper limit side of the above-mentioned lean-burn allowable area, and a boost pressure control rich-burn area, are defined respectively. In the boost pressure control lean-burn area, the ECU 30 operates the actuator 20 while fully opening the throttle valve 10 to control the super charging pressure of the turbo-charger 15 and set an air-fuel ratio so that the fuel-air mixture supplied to each combustion chamber 2 becomes lean. In the boost pressure control rich-burn area, the ECU 30 operates the actuator 20 to control the boost pressure of the turbo-charger 15 and set an air-fuel ratio so that the fuel-air mixture supplied to each combustion chamber 2 becomes the theoretical air-fuel ratio or lower.

Thus, in the internal combustion engine 1, while the variable nozzle mechanism (boost pressure adjusting means) VN including the movable vanes 19 and the actuator 20 plays an extremely important role in the control of the engine output (torque), there may be a case in the turbo-charger 15 in that the movable vanes 19 of the movable nozzle mechanism VN is fixed in a fully opened state, an intermediately opened state or an almost closed state due to the influence of heat, PM substance or others. Accordingly, in the internal combustion engine 1, it is necessary to assume a case where, due to the troubles in movable nozzle mechanism VM, the adjustment of the boost pressure is not favorably executed during the lean-burn operation while adjusting the opening degree of the plurality of nozzles formed of the movable vanes 19 particularly under the condition where the throttle valve 10 is fully open.

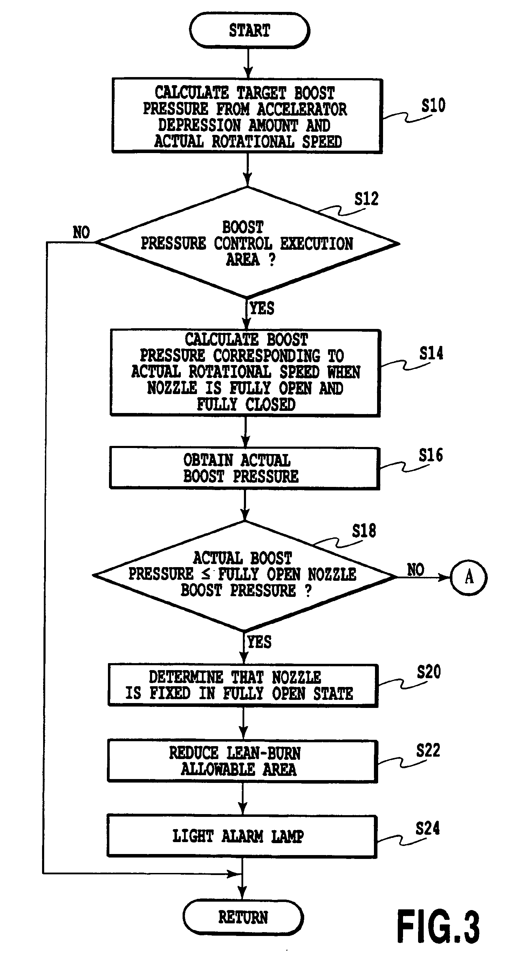

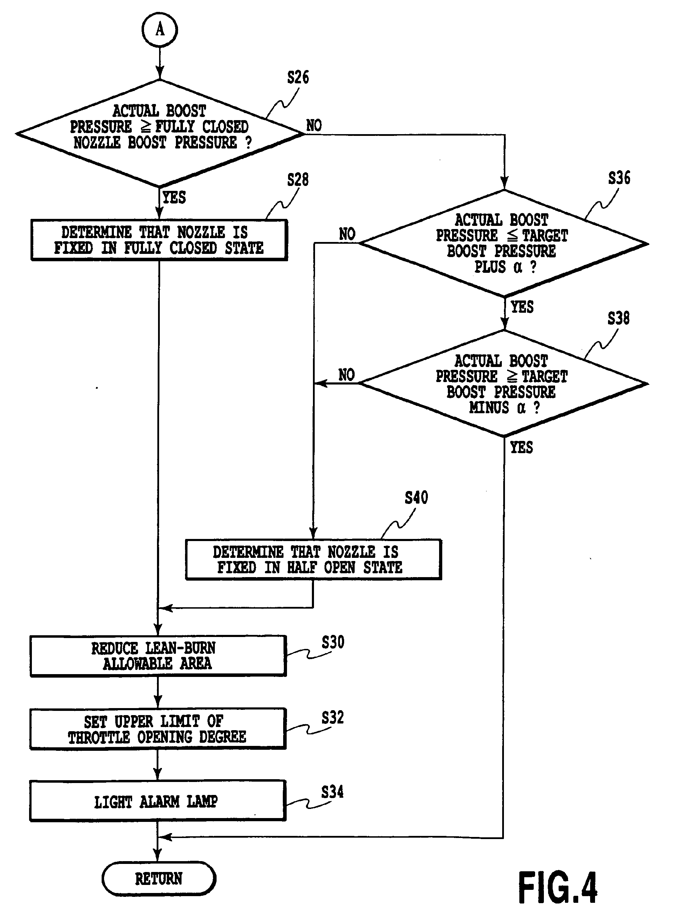

For this purpose, a routine shown in Figs. 3 and 4 is repeated at a predetermined time interval in the internal combustion engine 1 during the operation, and it is determined during the routine whether or not the abnormality occurs in the variable nozzle mechanism VN (the movable vanes 19). If it is determined that the fixation occurs in the movable vanes 19, a suitable control is executed according to the state of fixation of the movable vanes 19.

That is, at the execution timing of the routine shown in Fig. 3 and others, the ECU 30 first obtains the depression amount of the accelerator based on a signal from the accelerator position sensor 25, obtains an actual engine rotational speed (an actual rotational speed) based on a signal from the crank angle sensor 26, and a target boost pressure corresponding to the depression amount of the accelerator and the actual rotational speed is obtained using a predetermined target boost pressure setting map (S10). Then, the ECU 30 determines whether or not the opening degree of the plurality of nozzles formed of the movable vanes 19 is to be adjusted by operating the actuator 20, that is, whether or not the internal combustion engine 1 is to be operated in the boost pressure control lean-burn area or in the boost pressure control rich-burn area described above (S12). If it is determined at step S12 that the adjustment of the plurality of nozzles formed of the movable vanes 19 is unnecessary, the ECU 30 temporarily finishes the routine and waits for the next timing for executing the routine.

Contrarily, if it is determined at step S12 that the adjustment of the plurality of nozzles formed of the movable vanes 19 is necessary, the ECU 30 obtains a fully open nozzle boost pressure and a fully closed nozzle boost pressure corresponding to the actual rotational speed obtained at step S10 using a predetermined map or a predetermined functional equation (S14). The fully open nozzle boost pressure obtained at S14 is a boost pressure assumed to be obtained when the opening degree of the plurality of nozzles formed of the movable vanes 19 is maximally set (when the variable nozzle mechanism VN is set at the lower limit of the boost pressure adjustment range) at the actual rotational speed obtained at step S10. Also, the fully closed nozzle boost pressure obtained at S14 is a boost pressure assumed to be obtained when the opening degree of the plurality of nozzles formed of the movable vanes 19 is minimally set (when the variable nozzle mechanism VN is set at the upper limit of the boost pressure adjustment range) at the actual rotational speed obtained at step S10.

After the fully open nozzle boost pressure and the fully closed nozzle boost pressure have been obtained at S14, the ECU 30 obtains air pressure taken into each combustion chamber 2; i.e., the actual boost pressure by the turbo-charger 15; based on a signal from the intake pressure sensor 21 (S16). Then, the ECU 30 determines whether or not the actual boost pressure obtained at S16 is lower than the fully open nozzle boost pressure obtained at S14 (S18). In this regard, a fact that the actual boost pressure is lower than the fully open nozzle boost pressure at the same actual rotational speed means that there may be any abnormality in the variable valve mechanism VN causing the reduction of the boost pressure. Accordingly, if the answer is affirmative at S18, the ECU 30 determines that the movable vanes 19 are fixed to the fully open state (the maximum opening degree) and the variable nozzle mechanism VN including the movable vanes 19 is broken at the lower limit of its boost pressure adjustment range (S20), and executes the process for reducing the above-mentioned lean-burn allowable area (S22).

At S22, the ECU 30 rewrites a map defining a threshold value at which the operation mode is switched between the lean-burn operation and the rich-burn operation so that an amount of intake air during the execution of the lean-burn operation becomes smaller than an amount of intake air when the throttle valve 10 is fully open under the condition where the opening degree of the plurality of nozzles formed of the movable vanes 19 is maximally set (the variable nozzle mechanism VN is set at the lower limit of the boost pressure adjustment range). Thereby, the lean-burn allowable area is reduced to a range defined by a curve shown by a broken line in Fig. 2 where the throttle valve is fully open and the nozzle is fully open.

As a result, even if any movable vane 19 is fixed in the fully open state and the variable nozzle mechanism VN is broken at the lower limit of its boost pressure adjustment range, the lean-burn operation is still permitted within a range wherein the amount of air taken into each combustion chamber 2 is accurately adjustable to correspond to the required torque by the control of the throttle valve 10. That is, according to the internal combustion engine 1, since even if the movable vane 19 is fixed in the fully open state and the variable nozzle mechanism VN is broken at the lower limit of its boost pressure adjustment range, the lean-burn operation is still permitted within a range where the amount of air taken into each combustion chamber 2 is accurately adjustable to correspond to the required torque by the control of the throttle valve 10, it is possible to suppress the deterioration of the fuel consumption. When the process for reducing the lean-burn allowable area is executed at S22, the ECU 30 lights an alarm lamp (not shown) for informing the abnormality of the variable nozzle mechanism VN in the turbo-charger 15 (S24), and waits for the next execution timing of the routine.

On the other hand, if it is determined at S18 that the actual boost pressure obtained at S14 is higher than the fully open nozzle boost pressure, the ECU 30 determines whether or not the actual boost pressure obtained at S16 is higher than the fully closed nozzle boost pressure obtained at S16 (S26). In this regard, a fact that the actual boost pressure is higher than the fully closed boost pressure at the same actual rotational speed means that the abnormality causing the boost pressure to increase may occur in the variable nozzle mechanism VN. Thus, when the answer is affirmative at S 26, the ECU 30 determines that the movable vane 19 is fixed in an almost fully closed state (a state wherein the opening degree is minimum) and the variable nozzle mechanism VN including the movable vanes 19 is broken at the upper limit of its boost pressure adjustment range (S28), and executes the process for reducing the lean-burn allowable area in this case as well (S30).

Also at S30, the ECU 30 rewrite the map defining the threshold value at which the operation mode is switched between the lean-burn operation and the rich-burn operation so that an amount of intake air during the execution of the lean-burn operation becomes smaller than an amount of intake air when the throttle valve 10 is fully open under the condition where the opening degree of the plurality of nozzles formed of the movable vanes 19 is maximally set (the variable nozzle mechanism VN is set at the lower limit of the boost pressure adjustment range). Thereby, the lean-burn allowable area is reduced to a range defined by a curve shown by a broken line in Fig. 2 wherein the throttle valve is fully open and the nozzle is fully open.

As a result, even if the movable vane 19 is fixed in an almost fully closed state and the variable nozzle mechanism VN is broken at the upper limit of its boost pressure adjustment range, the lean-burn operation is permitted only in a case where the actual amount of intake air to the respective combustion chamber 2 (an amount of intake air corresponding to the required torque) is less than an amount of intake air when the opening degree of the plurality of nozzles formed of the movable vanes 19 is maximally set (when the variable nozzle mechanism VN is set at the lower limit of the boost pressure adjustment range) while fully opening the throttle valve 10.

When the variable nozzle mechanism VN of the turbo-charger 15 is broken at the upper limit of the boost pressure adjustment range, the amount of air taken into the respective combustion chamber 2 is adjustable in correspondence with the required torque by controlling the throttle valve 10 within a somewhat wide range. However, when the amount of intake air is adjusted solely by the throttle valve 10, there may be a risk, as shown in Fig. 2 by a two-dot chain line, in that the boost pressure unnecessarily rises to generate an excessive torque although the air-fuel ratio of the fuel-air mixture in each combustion chamber 2 is set to be lean. To eliminate such a risk, according to the internal combustion engine of this embodiment, when the answer is affirmative at S26, the lean-burn allowable area is forcibly reduced to the same range as that when it is determined that the variable nozzle mechanism VN of the super charger 15 is broken at the lower limit of the boost pressure adjustment range. Thereby, according to the internal combustion engine 1, it is possible to suppress the deterioration of the drivability of a car caused by the generation of excessive torque due to the excessive rise of the boost pressure during the lean-burn operation while the variable nozzle mechanism VN of the turbo-charger 15 is broken at the upper limit of the boost pressure adjustment range.

When the process for reducing the lean-burn allowable area is executed at S30, the ECU 30 sets a predetermined upper limit guard (an upper limit value) of the opening degree of the throttle valve 10 (S32), so that the actual amount of air taken into each combustion chamber 2 does not exceed the amount of intake air when the throttle valve 10 is fully open while the variable nozzle mechanism VN is set at the lower limit of the boost pressure adjustment range. In such a manner, when it is determined that the variable nozzle mechanism VN is broken at the upper limit of the boost pressure adjustment range, it is possible to suppress the excessive rise of the boost pressure described above by further setting a limit (upper limit) in the opening degree of the throttle valve 10. After the process at S32, the ECU 30 lights an alarm lamp (not shown) for informing the abnormality of the variable nozzle mechanism VN of the turbo-charger 15 (S34), and waits for the next execution timing of the routine.

When it is determined at S26 that the actual boost pressure is lower than the fully closed nozzle boost pressure obtained at S14, the ECU 30 determines whether or not the actual boost pressure obtained at S 16 is lower than the target boost pressure obtained at S10 plus a predetermined hysteresis α (S36). If it is determined that the actual boost pressure is lower than the target boost pressure plus hysteresis α, the ECU 30 further determines whether or not the actual boost pressure obtained at S16 is higher than the target boost pressure obtained at S10 minus a predetermined hysteresis α (S38). If the answer is affirmative at S36 and S38, the actual boost pressure approximately coincides with the target boost pressure. Accordingly, in this case, the ECU 30 determines that there is no abnormality in the variable nozzle mechanism VN including the movable vanes 19, and temporarily finishes the routine and waits for the next execution timing of the routine.

On the contrary, if the answer is negative at S36, there is a risk in that the movable vane 19 may be fixed on an opening side (a large opening degree side) since the actual boost pressure does not reach the target boost pressure. While, if the answer is negative at S38, there is a risk in that the movable vane 19 may be fixed on a closing side (a small opening degree side) since the actual boost pressure exceeds the target boost pressure. Accordingly, if the answer is negative at S36 or S38, the ECU 30 determines that the movable vane 19 is fixed at an intermediate opening degree (between the maximum opening degree and the minimum opening degree) (S40), and executes a process for narrowing the lean-burn allowable area at S30.

That is, when the movable vane 19 is fixed at the intermediate opening degree, there is also a risk in that the boost pressure unnecessarily rises to generate the excessive torque as shown by a two-dot chain line in Fig. 2, although the air-fuel ratio of the fuel-air mixture in each combustion chamber 2 is set to be lean. Accordingly, also in such a case, the lean-burn operation is solely allowable when an actual amount of air taken into each combustion chamber 2 (an amount of intake air corresponding to the required torque) is less than an amount of intake air while the throttle valve 10 is fully open under the condition where the opening degree of the plurality of nozzles formed of the movable vanes 19 is maximally set.

Also, when it is determined that the movable vane 19 is fixed at the intermediate opening degree, the ECU 30 sets a predetermined upper limit guard (an upper limit value) of the opening degree of the throttle valve 10 so that the actual amount of air taken into the respective combustion chamber 2 does not exceed an amount of intake air when the throttle valve is fully open under the condition where the variable nozzle mechanism VN is set at the lower limit of the boost pressure adjustment range (S32). After the process at S32, the ECU 30 lights an alarm lamp (not shown) for informing the abnormality of the variable nozzle mechanism VN of the turbo-charger 15 (S34), and waits for the timing of the next execution of the routine.

In such a manner, in the internal combustion engine 1, the lean-burn operation is executed solely in a suitable range when the abnormality occurs in the variable nozzle mechanism (boost pressure adjustment means) VN. Accordingly, it is possible to assuredly suppress the deterioration of the fuel consumption or the excessive rise of the boost pressure when the abnormality occurs in the variable nozzle mechanism VN. In this regard, the turbo-charger 15 of the above-mentioned internal combustion engine 1 is not limited to a so-called variable nozzle type but may include other mechanisms for variably controlling a turbine capacity as boost pressure adjusting means (A/R variable means). Further, boost pressure adjusting means of the turbo-charger 15 may, of course, be a waste-gate valve for adjusting an amount of exhaust gas conducted to the turbine impeller 17 of the turbo-charger 15.

The present invention has been described in detail with respect to preferred embodiments, and it will now be apparent from the foregoing to those skilled in the art that changes and modifications may be made without departing from the invention in its broader aspect.

## Claims

1. An internal combustion engine capable of executing a lean-burn operation for burning a lean fuel-air mixture in a combustion chamber, comprising
a throttle valve for adjusting an amount of air taken into the combustion chamber;
a turbo-charger for boosting air taken into the combustion chamber;
means for adjusting a boost pressure caused by the turbo-charger;
means for setting an air-fuel ratio so that the fuel-air mixture becomes lean within a range of a predetermined lean-burn allowable area; and
means for determining whether or not the abnormality occurs in the boosting adjustment means; wherein
when it is determined by the abnormality determination means that the abnormality occurs in the boost pressure adjustment means, the lean-burn allowable area is reduced so that an amount of intake air during the execution of the lean-burn operation is less than an amount of intake air when the throttle valve is fully open under the condition where the boost pressure adjustment means is set at a lower limit of a boost pressure adjustment range.

2. An internal combustion engine as defined by claim 1, wherein an amount of air taken into the combustion chamber, besides the boost pressure, is set in a predetermined operating area by controlling the boost pressure adjustment means under the condition where the throttle valve is fully open.

3. An internal combustion engine as defined by claim 1 or 2, wherein an upper limit value of the opening degree of the throttle valve is set so that an actual amount of intake air does not exceed an amount of intake air when the throttle valve is fully open under the condition where the boosting adjustment means is set at a lower limit of a boost pressure adjustment range.

4. An internal combustion engine as defined by any one of claims 1 to 3, wherein the boost pressure adjustment means is a variable nozzle mechanism in the turbo-charger.

5. An internal combustion engine as defined by any one of claims 1 to 3, wherein the boost pressure adjustment means is a waste-gate valve for adjusting an amount of exhaust gas introduced into the turbo-charger.

6. A method for operating an internal combustion engine capable of executing a lean-burn operation for burning a lean fuel-air mixture in a combustion chamber, the internal combustion engine comprising a throttle valve for adjusting an amount of air taken into the combustion chamber, a turbo-charger for boosting air taken into the combustion chamber, and means for adjusting a boost pressure caused by the turbo-charger, wherein
the method comprises a step for allowing the lean-burn operation when it is determined that the abnormality occurs in the boost pressure adjustment means, solely in a case where an amount of intake air corresponding to a torque required for the internal combustion engine is less than an amount of intake air when the throttle valve is fully open under the condition where the boost pressure adjustment means is set at a lower limit of a boost pressure adjustment range.

7. A method as defined by claim 6, further comprising a step for setting an amount of air taken into the combustion chamber by controlling the boost pressure adjustment means in a predetermined operation area under the condition where the throttle valve is fully open.

8. A method as defined by claim 6 or 7, further comprising a step for setting an upper limit value of an opening degree of the throttle valve when it is determined that the abnormality occurring in the boost pressure adjustment means increases the boost pressure, so that an actual amount of intake air does not exceed an amount of intake air when the throttle valve is fully open under the condition where the boost pressure adjustment means is set at a lower limit of the boost pressure adjustment range.

9. A method as defined by any one of claims 6 to 8, wherein the boost pressure adjustment means is a variable nozzle mechanism in the turbo-charger.

10. A method as defined by any one of claims 6 to 8, wherein the boost pressure adjustment means is a waste-gate valve for adjusting an amount of exhaust gas to be introduced into the turbo-charger.

## Patentansprüche

1. Verbrennungskraftmaschine, die dazu fähig ist, eine Mager-Verbrennungs-Operation zum Verbrennen eines mageren Kraftstoff-Luft-Gemisches in einer Verbrennungskammer auszuführen, mit
einem Drosselventil zum Anpassen einer in die Verbrennungskammer eingebrachten Luftmenge;
einem Turbolader zum Aufladen von in die Verbrennungskammer eingebrachter Luft;
einer Einrichtung zum Anpassen eines durch den Turbolader verursachten Ladedrucks;
einer Einrichtung zum Einstellen eines Luft-Kraftstoff-Verhältnisses, sodass das Kraftstoff-Luft-Gemisch innerhalb eines Bereiches eines vorbestimmten zulässigen Mager-Verbrennungs-Bereichs mager wird; und
einer Einrichtung zum Bestimmen, ob die Abnormität in der Ladeanpassungseinrichtung auftritt oder nicht; wobei
wenn durch die Abnormitätsbestimmungseinrichtung bestimmt wird, dass die Abnormität in der Ladedruckanpassungseinrichtung auftritt, der zulässige Mager-Verbrennungs-Bereich reduziert wird, so dass eine Ansaugluftmenge während des Ausführens der Mager-Verbrennungs-Operation kleiner als eine Ansaugluftmenge ist, wenn das Drosselventil in dem Zustand vollständig geöffnet ist, in dem die Ladedruckanpassungseinrichtung auf eine untere Grenze eines Ladedruck-Anpassungsbereichs eingestellt ist.

2. Verbrennungskraftmaschine gemäß Anspruch 1, wobei eine in die Verbrennungskammer eingebrachte Luftmenge neben dem Ladedruck in einen vorbestimmten Betriebsbereich durch Steuern der Ladedruck-Anpassungseinrichtung in dem Zustand eingestellt wird, in dem das Drosselventil vollständig geöffnet ist.

3. Verbrennungskraftmaschine gemäß Anspruch 1 oder 2, wobei ein oberer Grenzwert des Öffnungsgrades des Drosselventils eingestellt ist, so dass eine Ist-Ansaugluftmenge nicht eine Ansaugluftmenge übersteigt, wenn das Drosselventil in dem Zustand vollständig geöffnet ist, in dem die Ladeanpassungseinrichtung auf eine untere Grenze eines Ladedruck-Anpassungsbereichs eingestellt ist.

4. Verbrennungskraftmaschine gemäß einem der Ansprüche 1 bis 3, wobei die Ladedruck-Anpassungseinrichtung ein Mechanismus einer variablen Düse in dem Turbolader ist.

5. Verbrennungskraftmaschine gemäß einem der Ansprüche 1 bis 3, wobei die Ladedruck-Anpassungseinrichtung ein Druckventil zum Anpassen einer Menge von in den Turbolader eingebrachtem Abgas ist.

6. Verfahren zum Betreiben einer Verbrennungskraftmaschine, die dazu fähig ist, eine Mager-Verbrennungs-Operation zum Verbrennen eines mageren Kraftstoff-Luft-Gemisches in einer Verbrennungskammer auszuführen, wobei die Verbrennungskraftmaschine ein Drosselventil zum Anpassen einer in die Verbrennungskammer eingebrachten Luftmenge, einen Turbolader zum Aufladen von in die Verbrennungskammer eingebrachten Luft und eine Einrichtung zum Anpassen eines durch den Turbolader verursachten Ladedrucks aufweist, wobei
das Verfahren einen Schritt des Ermöglichens der Mager-Verbrennungs-Operation aufweist, wenn bestimmt wird, dass die Abnormität in der Ladedruck-Anpassungseinrichtung auftritt, nur in einem Fall, in dem eine Ansaugluftmenge entsprechend einem für die Verbrennungskraftmaschine benötigten Moment kleiner als eine Ansaugluftmenge ist, wenn das Drosselventil vollständig in dem Zustand geöffnet ist, in dem die Ladedruck-Anpassungseinrichtung auf eine untere Grenze eines Ladedruck-Anpassungsbereichs eingestellt ist.

7. Verfahren gemäß Anspruch 6, weiterhin mit einem Schritt zum Einstellen einer in die Verbrennungskammer eingebrachten Luftmenge durch Steuern der Ladedruck-Anpassungseinrichtung in einem vorbestimmten Operationsbereich in dem Zustand, in dem das Drosselventil vollständig geöffnet ist.

8. Verfahren gemäß Anspruch 6 oder 7, weiterhin mit einem Schritt zum Einstellen eines oberen Grenzwerts eines Öffnungsgrades des Drosselventils, wenn bestimmt wird, dass die Abnormität, die in der Ladedruck-Anpassungseinrichtung auftritt, den Ladedruck erhöht, so dass eine Ist-Ansaugluftmenge nicht eine Ansaugluftmenge übersteigt, wenn das Drosselventil vollständig in dem Zustand geöffnet ist, in dem die Ladedruck-Anpassungseinrichtung auf eine untere Grenze des Ladedruck-Anpassungsbereichs eingestellt ist.

9. Verfahren gemäß einem der Ansprüche 6 bis 8, wobei die Ladedruck-Anpassungseinrichtung ein Mechanismus einer variablen Düse in dem Turbolader ist.

10. Verfahren gemäß einem der Ansprüche 6 bis 8, wobei die Ladedruck-Anpassungseinrichtung ein Druckventil zum Anpassen einer Menge von in den Turbolader einzubringendem Abgas ist.

## Revendications

1. Moteur à combustion interne capable d'exécuter un fonctionnement à mélange pauvre afin de brûler un mélange carburant-air pauvre dans une chambre de combustion, comportant
un papillon des gaz destiné à ajuster une quantité d'air admis dans la chambre de combustion ;
un turbocompresseur destiné à augmenter la pression de l'air admis dans la chambre de combustion ;
des moyens destinés à ajuster une pression de suralimentation provoquée par le turbocompresseur ;
des moyens destinés à établir un rapport air-carburant de telle sorte que le mélange carburant-air devient pauvre dans une plage d'une zone à mélange pauvre prédéterminé possible ; et
des moyens destinés à déterminer si l'anomalie apparaît ou non dans les moyens d'ajustement de suralimentation ; dans lequel
lorsque l'on détermine grâce aux moyens de détermination d'anomalie que l'anomalie se produit dans les moyens d'ajustement de pression de suralimentation, la zone à mélange pauvre possible est réduite de telle sorte qu'une quantité d'air admis pendant l'exécution du fonctionnement à mélange pauvre est inférieure à une quantité d'air admis quand le papillon des gaz est complètement ouvert dans la condition où les moyens d'ajustement de pression de suralimentation sont réglés à une limite inférieure d'une plage d'ajustement de pression de suralimentation.

2. Moteur à combustion interne selon la revendication 1, dans lequel une quantité d'air admis dans la chambre de combustion, en dehors de la pression de suralimentation, est établie dans une zone de fonctionnement prédéterminée en commandant les moyens d'ajustement de pression de suralimentation dans la condition où le papillon des gaz est complètement ouvert.

3. Moteur à combustion interne selon la revendication 1 ou 2, dans lequel une valeur de limite supérieure du degré d'ouverture du papillon des gaz est établie de telle sorte qu'une quantité réelle d'air admis ne dépasse pas une quantité d'air admis quand le papillon des gaz est complètement ouvert dans la condition où les moyens d'ajustement de suralimentation sont réglés à une limite inférieure d'une plage d'ajustement de pression de suralimentation.

4. Moteur à combustion interne selon l'une quelconque des revendications 1 à 3, dans lequel les moyens d'ajustement de pression de suralimentation sont constitués par un mécanisme à géométrie variable dans le turbocompresseur.

5. Moteur à combustion interne selon l'une quelconque des revendications 1 à 3, dans lequel les moyens d'ajustement de pression de suralimentation sont constitués par une soupape de décharge destinée à ajuster une quantité de gaz d'échappement introduite dans le turbocompresseur.

6. Procédé de mise en oeuvre d'un moteur à combustion interne capable d'exécuter un fonctionnement à mélange pauvre afin de brûler un mélange carburant-air pauvre dans une chambre de combustion, le moteur à combustion interne comportant un papillon des gaz destiné à ajuster une quantité d'air admis dans la chambre de combustion, un turbocompresseur destiné à augmenter la pression de l'air admis dans la chambre de combustion, et des moyens destinés à ajuster une pression de suralimentation provoquée par le turbocompresseur,
le procédé comportant une étape destinés à permettre le fonctionnement à mélange lorsque l'on détermine que l'anomalie apparaît dans les moyens d'ajustement de pression de suralimentation, seulement dans un cas où une quantité d'air admis correspondant à un couple exigé pour le moteur à combustion interne est inférieure à une quantité d'air admis quand le papillon des gaz est complètement ouvert dans la condition où les moyens d'ajustement de pression de suralimentation sont réglés à une limite inférieure d'une plage d'ajustement de pression de suralimentation.

7. Procédé selon la revendication 6, comportant en outre une étape destinée à une quantité d'air admis dans la chambre de combustion en commandant les moyens d'ajustement de pression de suralimentation dans une plage de fonctionnement prédéterminée dans la condition où le papillon des gaz est complètement ouvert.

8. Procédé selon la revendication 6 ou 7, comportant en outre une étape destinée à établir une valeur de limite supérieure d'un degré d'ouverture du papillon des gaz lorsque l'on détermine que l'anomalie se produisant dans les moyens d'ajustement de pression de suralimentation augmente la pression de suralimentation de telle sorte qu'une quantité réelle d'air admis ne dépasse pas une quantité d'air admis quand le papillon des gaz est complètement ouvert dans la condition où les moyens d'ajustement de pression de suralimentation sont réglés à une limite inférieure de la plage d'ajustement de pression de suralimentation.

9. Procédé selon l'une quelconque des revendications 6 à 8, selon lequel les moyens d'ajustement de pression de suralimentation sont constitués par un mécanisme à géométrie variable dans le turbocompresseur.

10. Procédé selon l'une quelconque des revendications 6 à 8, selon lequel les moyens d'ajustement de pression de suralimentation sont constitués par une soupape de décharge destinée à ajuster une quantité de gaz d'échappement devant être introduite dans le turbocompresseur.
